# EUROPEAN PATENT SPECIFICATION

(11) **EP 1 213 898 B1**
(45) Date of publication and mention of the grant of the patent: **03.11.2004**
(21) Application number: 00310779.4
(22) Date of filing: 05.12.2000
(51) Int. Cl.: H04M 1/2745

(54) **Method of automatically providing the country code and area code of a phone number by selecting the city**
Verfahren zur automatischen Versorgung der Ländervorwahl und der Gebietsvorwahl durch Auswahl einer Stadt
Méthode pour fournir automatiquement l'indicatif de pays et l'indicatif régional d'un numéro de téléphone en sélectionnnant la ville

(43) Date of publication of application: 12.06.2002
(73) Proprietor: Inventec Appliances Corp., Wugu Shiang, Taipei (TW)
(72) Inventor: Chen, Yu-Bin, Development District, Shanghai (CN); Ho, David, Wugu Shiang, Taipei (TW); Tsai, Tony, Wugu Shiang, Taipei (TW)
(74) Representative: Want, Clifford James

(56) References cited:
- EP-A- 0 961 460
- US-A- 5 341 413
- US-A- 6 125 287

## Description

### BACKGROUND OF THE INVENTION

### Field of Invention

The present invention relates to a method of automatically providing the country code and area code of a phone number by selecting the city by the user. The method can be applied to programmed screen phones, mobile phones, personal digital assistants (PDAs) or any communication device with the dialing function.

### Related Art

Due to the progress in global communication systems, international communications and businesses become more often. Different dialing codes for various areas in different countries may confuse people and cause difficulty in communications. For example, suppose a business manager has three important clients and their phone numbers are 33933600, 33933601, and 33933602. So the address book in the his mobile phone is stored with the data listed in TABLE 1:

**TABLE 1**

| NO. | NAME | PHONE NUMBER |
|---|---|---|
| 1 | AAA | 33933600 |
| 2 | BBB | 33933601 |
| 3 | CCC | 33933602 |

When the three clients are at home, the business manager can conveniently pull out their phone numbers from the address book and ask the phone to automatically dial out. However, if the clients are away from home and traveling to Paris in France, London in England, and Tokyo in Japan, respectively, those data in the address book become useless. Unless entering new phone data, the business manager has to look up the country code and area code of these cities (the country codes are 33 for France, 44 for England, and 81 for Japan; the area codes are 1 for Paris, 20 for London, and 3 for Tokyo) and to change their respective phone numbers into 0033-1-33933600, 0044-20-33933601, and 0081-3-33933602 (as in TABLE 2) before he can make calls to them.

**TABLE 2**

| NO. | NAME | PHONE NUMBER |
|---|---|---|
| 1 | AAA | 0033-1-33933600 |
| 2 | BBB | 0044-20-33933601 |
| 3 | CCC | 0081-3-33933602 |

If these clients travel to Finland or Greece, the business manager then has to modify the address book in a similar way or manually dial the numbers. That is, once a client travel to a new city, he has to modify the phone data of the client. This is obviously very inconvenient; but it happens to the conventional mobile phone or screen phone all the time.

Since the frequency of using a mobile phone to make international phone calls has been increasing, it is therefore rather important to have a method of automatically providing the country code and area code of a phone number by selecting the city so as to save the trouble in modifying phone data repeatedly caused by different dialing codes in different areas of countries. Reference is made to documents US-A-5 341 413 and EP-A-0 961 460.

### SUMMARY OF THE INVENTION

The invention is as set out in the independent claims 1 and 10, preferred forms being set out in the dependent claims.

The present invention provides a method of automatically providing the country code and area code of a phone number by selecting the city. This method can be applied to programmed screen phones, mobile phones, personal digital assistants (PDAs) or communication devices with the dial function.

The disclosed method has to be applied in communication devices that have the function to convert "+" into the standard international ID code. The method comprises the steps of: collecting the country codes and area codes of cities in all countries; sorting and numbering these cities to generate a look-up table; and using the look-up table to find and enter the country code and area code of the city selected by a user.

### BRIEF DESCRIPTION OF THE DRAWINGS

The present invention will become more fully understood from the detailed description given hereinbelow illustration only, and thus are not limitative of the present invention, and wherein:
FIG. 1 shows a keypad of a conventional mobile phone;
FIG. 2 is a flowchart of the complete data processing procedure of the invention;
FIG. 3 is a flowchart of the complete dialing procedure of the invention; and
FIGS. 4 through 14 schematically show the complete dialing procedure on a mobile phone of the invention.

### DETAILED DESCRIPTION OF THE INVENTION

The invention discloses a method of automatically providing the country code and area code of a phone number by selecting the city. Before describing how to establish a database of country codes and area codes, we first explain the dialing procedure for international calls. The numbers should be the INTERNATIONAL ID CODE of the caller + the COUNTRY CODE of the receiver + the AREA CODE of the receiver + the PHONE NUMBER of the receiver. One should note that the country codes and area codes are different for different countries. For example, Shanghai in China has 86-21, Paris in France has 33-1, and London in England has 44-20. In the present invention, the phone network support the international ID code "+". That is, the phone network can convert "+" into the standard international long distance ID code. Normally, domestic long distance calls start with [0], which should be omitted in international calls.

For example, if one makes an international call from Mainland China to some company in Tokyo, Japan, the country code of Japan is [81], the area code of Tokyo is [3], the company phone number is [3393-3600], and the international long distance ID code for Mainland China is [00], then the long distance phone number should be entered as 00-81-3-33933600. If one wants to dial the same phone number to Vienna in Austria, the number then becomes 0043-1-3-33933600 or +43-1-3-33933600.

In this invention, the data of country codes and area codes can be arbitrarily expanded and modified in case the collection is not complete or there are incorrect data. So the invention provides the functions of input, modification and expansion. The invention further collects information relevant for some cities (such as the time difference with the Greenwich time, local monthly average temperature, etc) for the user to have some basic knowledge about the city.

TABLE 3 lists the initial data structure of a single city. TABLE 4 lists the data structure for Vienna.

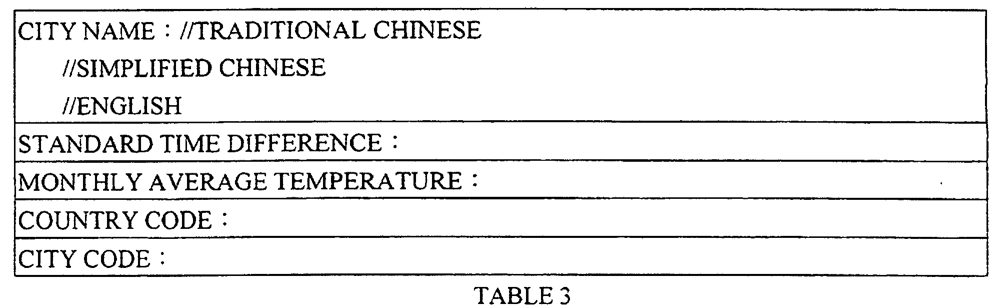

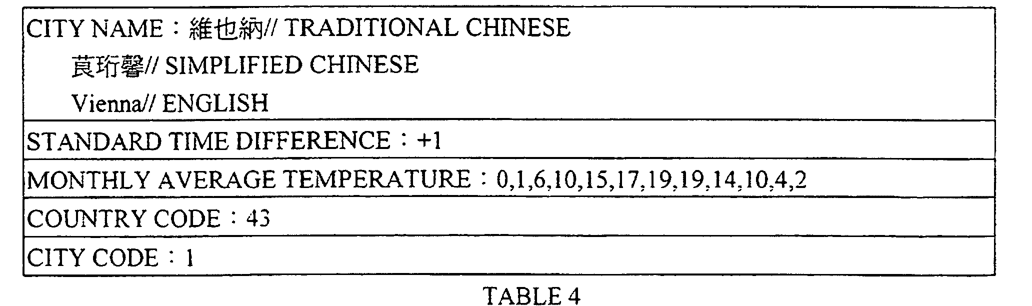

The initial data structure of a single city is defined as follows:

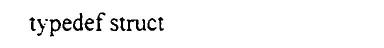

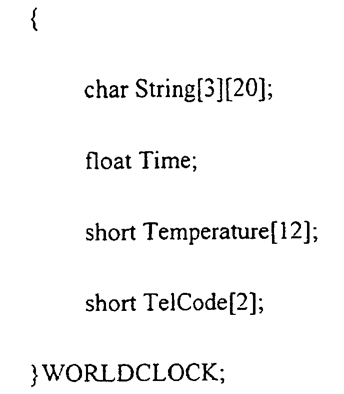

Taking into account the fact that every country may have a different translation for the city name, the country and area codes are sorted according to the alphabetic order of their English names. During the whole procedure of data processing, one first has to establish the city long distance codes in the database. Suppose there are 545 cities in the database, then two sets of data will be generated in the processing:

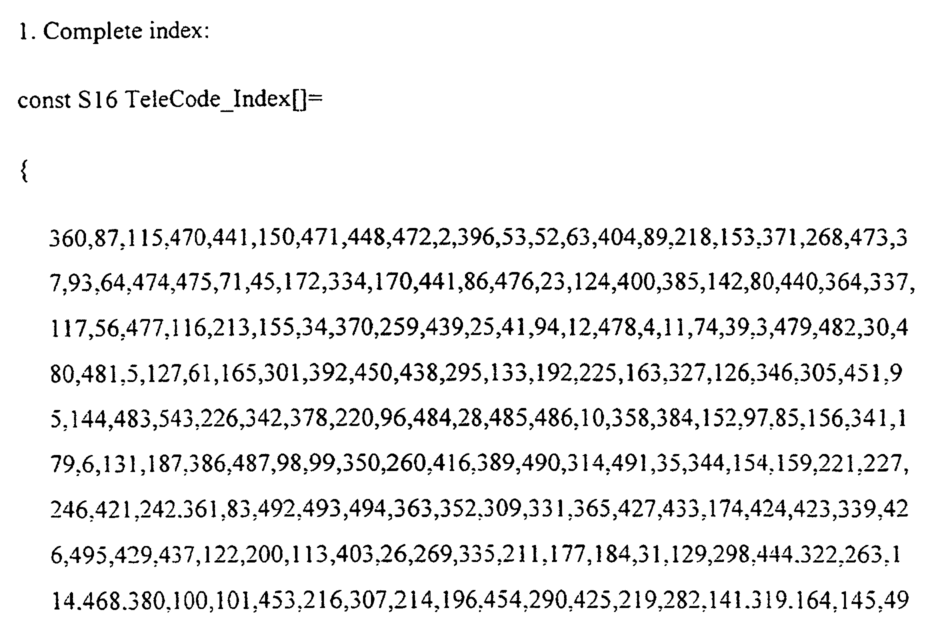

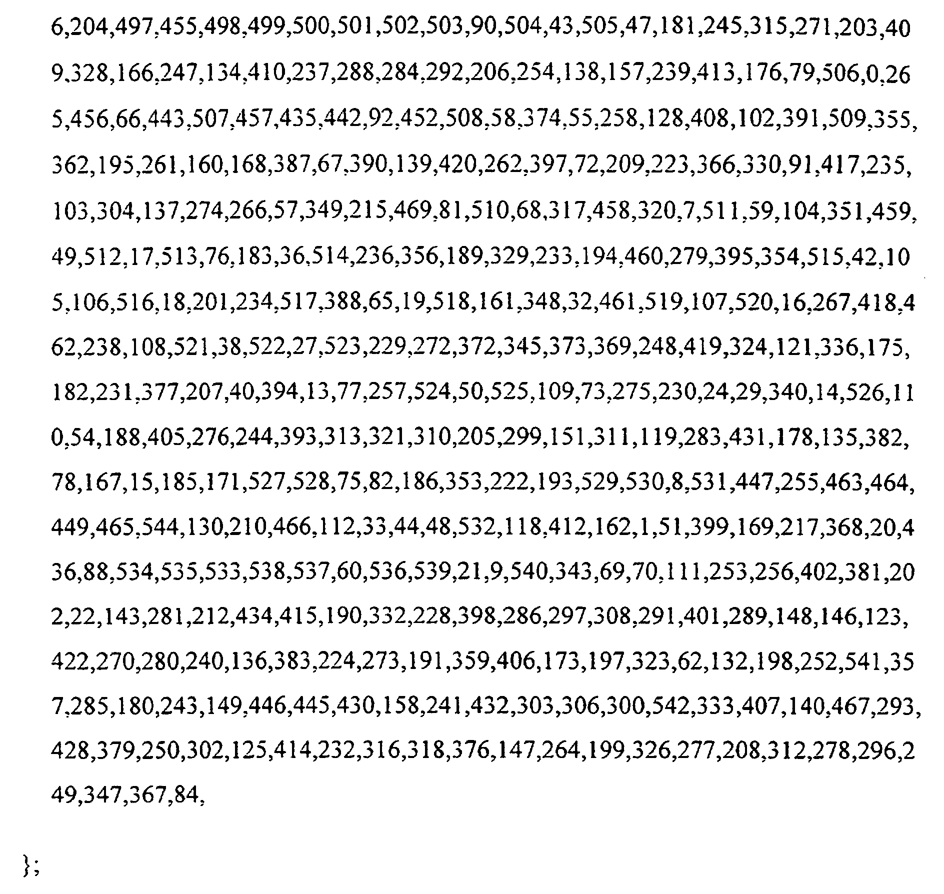

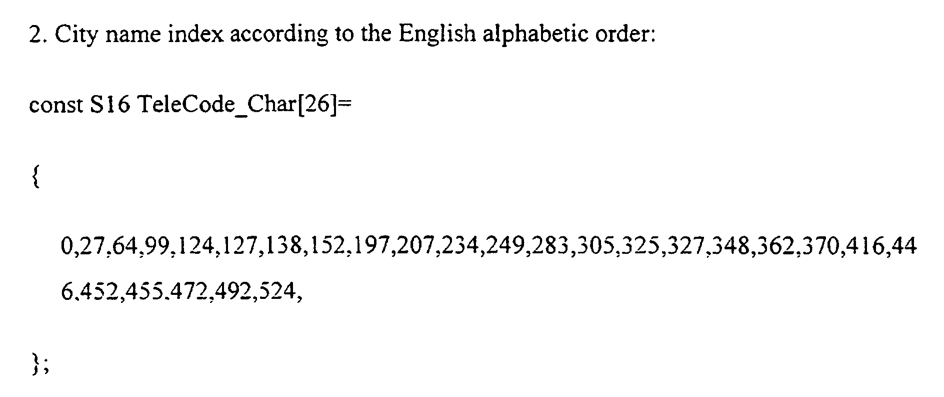

In the option screen, the first displayed city number is TeleCode_Index[0], the second displayed city number is TeleCode_Index[1],...and the ith displayed city number is TeleCode_Index[i-1]. After the user enter "ch", the value of TeleCode_Index[ch-A] gives the index of city names starting with "ch". The option screen jumps to those city names starting with "ch" for the user to look up quickly.

The above-mentioned database is the base for automatically providing country and area codes. After selecting the desired city from the worldwide city option list, the invention automatically adds in the front of the phone number the correct country and area codes to form a correct dialing number series. It is very helpful for automatic answering systems on screen phones or mobile phones that can store phone numbers and automatic dial out.

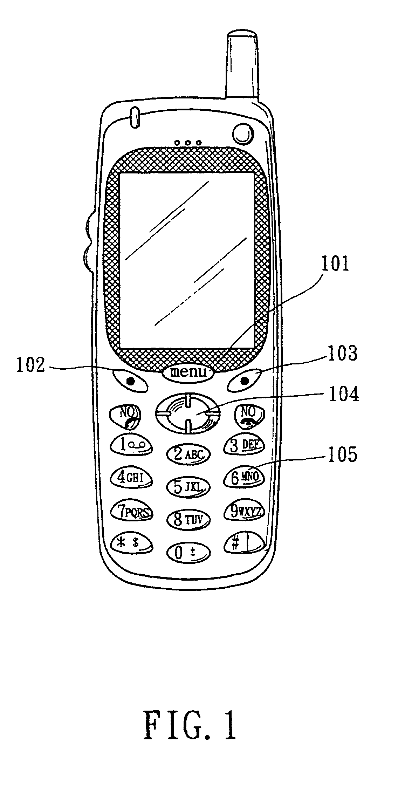

Referring to FIG. 1, the keypad of a conventional mobile phone contains a function option key 101, a left function key 102, a right function key 103, a direction key 104 and CCITT keys 105. The CCITT keys 105 are in accordance with the standards set forth by the International Telegraph and Telephone Consultative Committee.

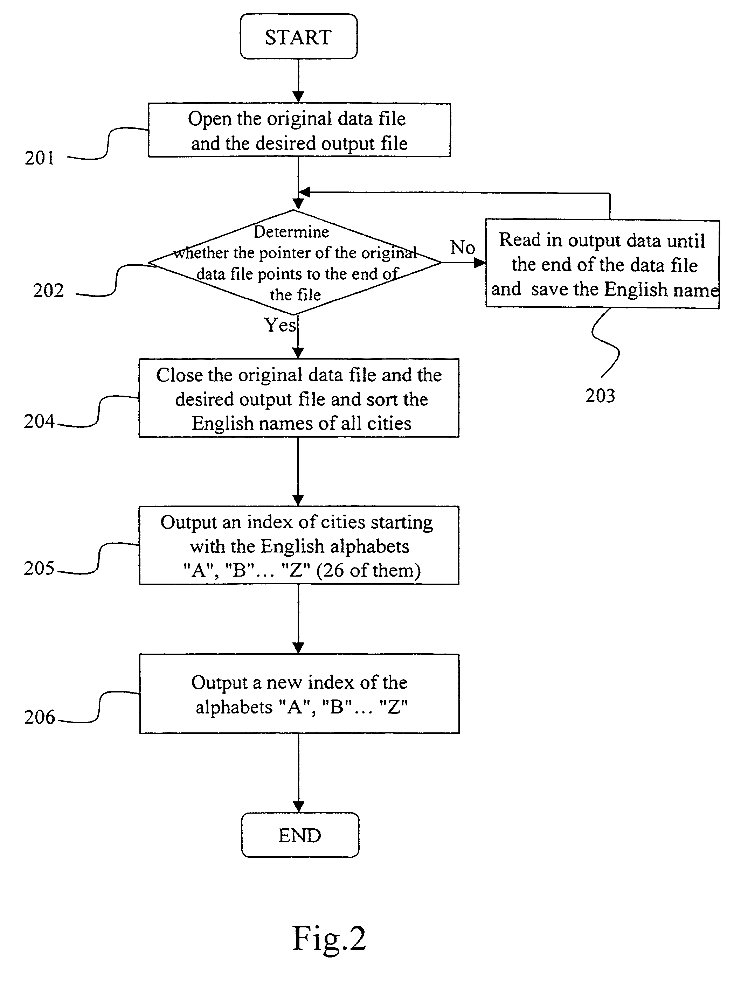

With reference to FIG. 2, step 201 opens an original data file and a desired output file. Step 202 determines whether the pointer of the original data file has pointed to the end of the file. A set of data is retrieved if the pointer has not pointed to the end of the file and the English names are stored until reaching the end of the data file (step 203). The original data file and the output file are then saved. All cities are sorted according to their English name (step 204). An index of city names starting with "A", "B", "C"..."Z" (totally 26 of them) (step 205) is output. Afterwards, the city names are sorted according to the next letter and a new index is output (step 206) for the convenience of use inquiries.

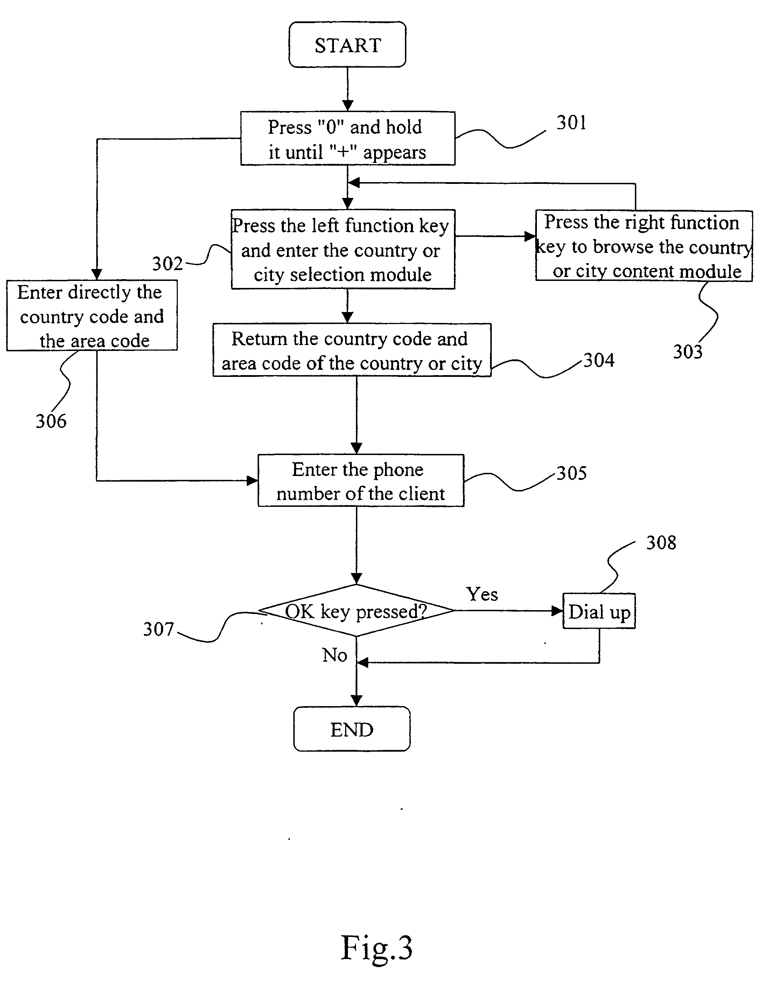

With reference to FIG. 3, the invention is further described using a preferred embodiment. First, the user presses "0" and hold it until "+" appears (step 301). A left function key is then pressed to enter a country or city module (step 302). The present invention also provides a right function key to press for entering a country or city content module (step 303). The left and right function keys are only one design of the invention and should not be used to limit the scope of the invention.

After selecting the country or city, the correct country code or area code is returned (step 304). The user then enters the phone number of the receiver to complete the whole phone number series (step 305). The invention further provides a manual method to enter the country and area codes directly (step 306). Finally, the system determines whether an OK key is pressed (step 307). If the OK key is pressed, then the mobile phone will dial out directly (step 308); otherwise, the dialing procedure is ceased.

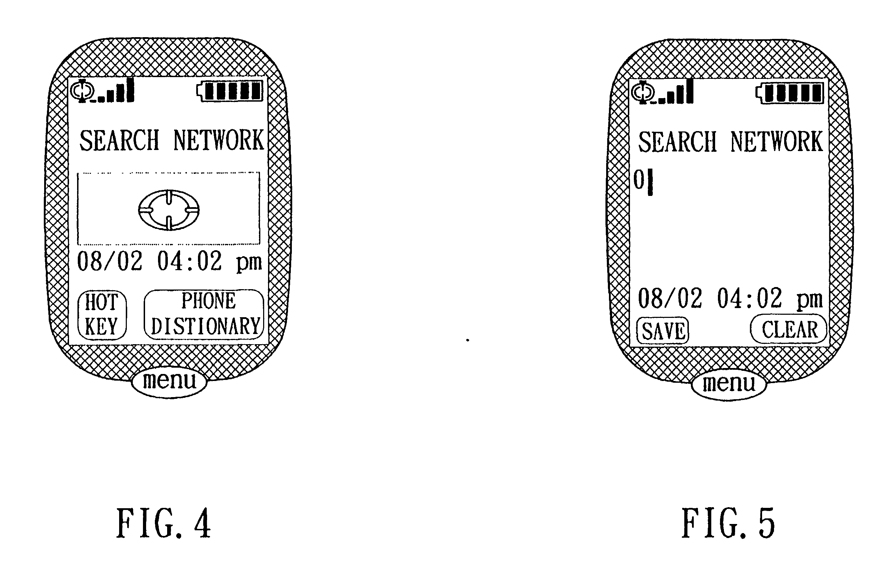

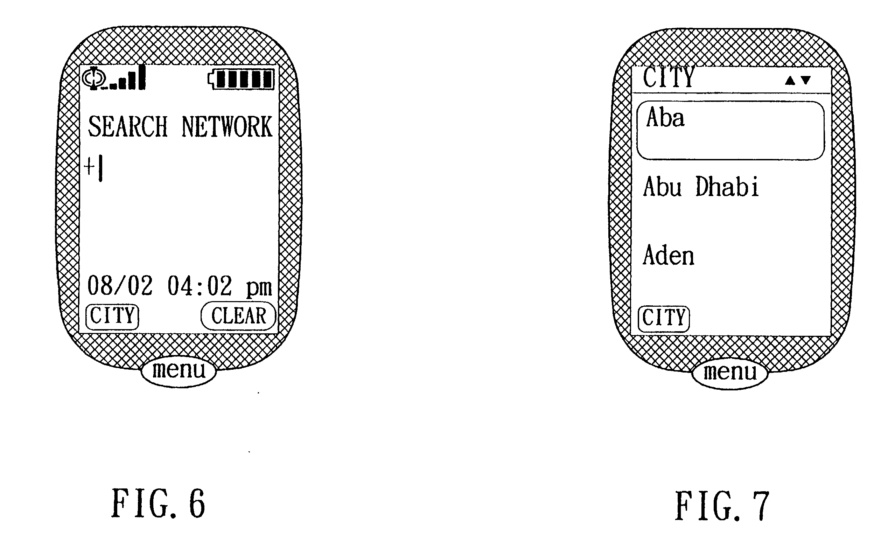

The whole procedure of dialing a number according to the disclosed method is demonstrated in FIGS. 4 through 14. The mobile phone is first in the standby state (FIG. 4). If the user wants to call a friend in Brisbane (Australia) with the phone number 45789612, he should press "0" for a period of time. The screen will first display "0" (FIG. 5) and then changes to "+" (FIG. 6). If the user does not know the country and area codes, he can press the left function key to enter the worldwide city selection list (FIG. 7).

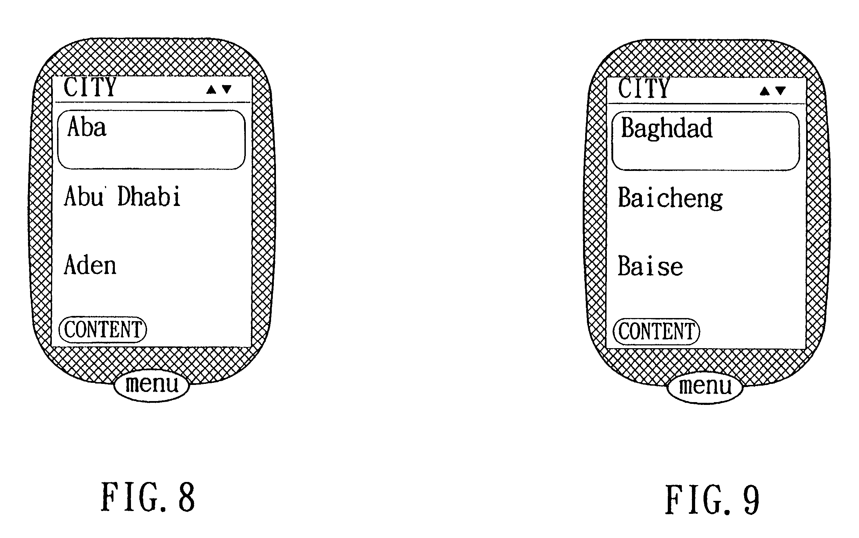

In the city selection screen, the user can press the direction key to browse through them. He can also press the left or right function key to flip through the pages. If he press a number key of "2" through "9", an English letter will be displayed in the center at the bottom of the screen (FIG. 8) for fast searches.

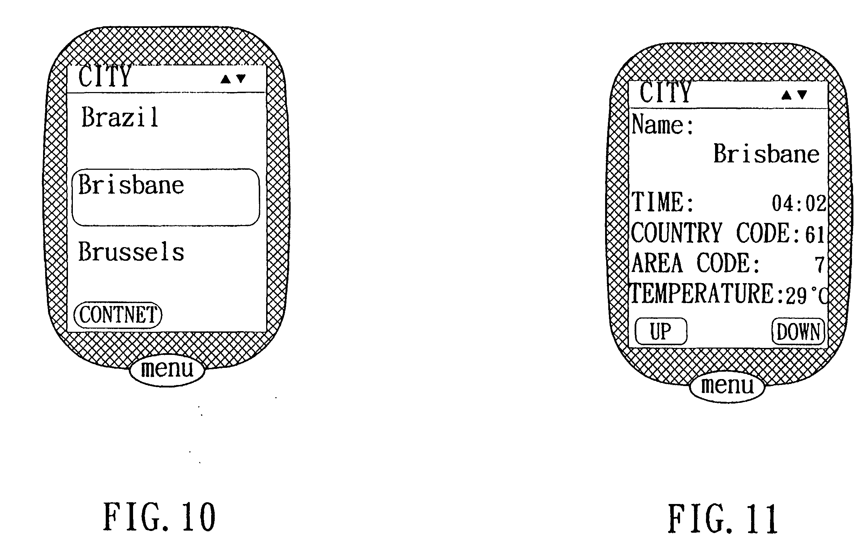

If the user press "2" twice, the cursor will stop on a city starting with a "B" (FIG. 9). He can then press the direction key to find Brisbane (FIG. 10). If the user is interested in learning about the city, he can press the left function key to look up the local time, the monthly average temperature, the country code, and the area code of the city (FIG. 11). If he finds out that the local time is in the midnight, he will probably decide not to call. Once he learns the local temperature, he can make a considerate greeting to his friend there.

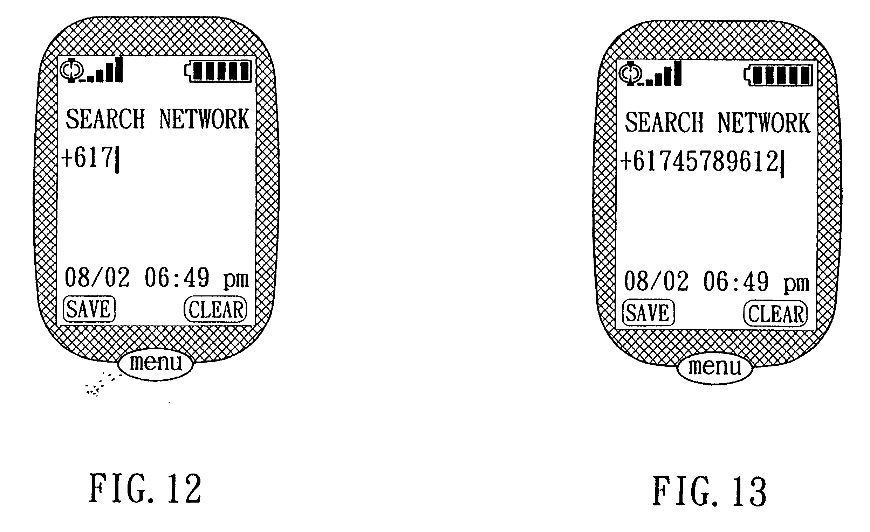

After pressing the OK key, the system returns to a dialing screen wherein the country and area codes for Brisbane have been added (FIG. 12). The user finally enters the phone number "45789612" (FIG. 13).

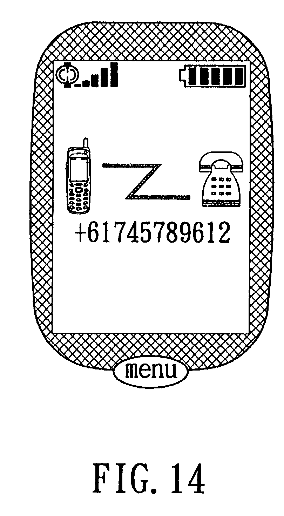

The disclosed method has to satisfy the "+" standard supported by the local telephone network. That is, "+" replaces the prefix code for international calls. After combining with the country code, the area code, and the local phone number, an international call dialing number is thus formed. The user only needs to press the OK key to make the call (FIG. 14).

The present invention can also automatically identify the location of an incoming call or a phone number in the address book and provide related information according to the incoming call or the phone number recorded in the address book along with the database of the invention. Such useful information can be time (time difference), date, average temperature and travel information.

Finally, the invention can arbitrarily expand and modify the database of country codes and area codes. If the country code or area of a city is changed, the user has to modify the contents of this city in the database. The modification procedure is as follows:
1. Find the city from the city selection list screen and enter the city;
2. Press the function selection key 101 to switch to the editing mode;
3. Modify the incorrect data;
4. Store data and return to the city select list screen.

On the other hand, taking into account the fact that some country or area codes are not collected in the database, the invention further provides the user appending input mode. The procedure is as follows:
1. Press the function selection key 101 to switch to the appending mode in the city selection list screen;
2. Enter contents of all items (items with no values are kept empty, and values in the same item are separated with commas);
3. Store data and sort the cities according to their names.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A method of international dialling in a mobile communications device having a keypad with a telephone dialling function, the method comprising the steps of:
a) providing a look-up table of country codes and area codes of cities in different countries;
b) entering or selecting a city name and addressing the look-up table therewith for providing the country code and area code thereof;
c) entering a local telephone number, and
d) combining said local telephone number with the country code and area code of step b) and dialling the resulting international telephone number.

2. A method according to claim 1 wherein the mobile communications device has at least one direction key (104) and a function key (102) and wherein the function key is pressed for displaying a list of city names and said direction key is adapted to select a city name in said list for addressing the look-up table in step b).

3. The method of claim 1, wherein the mobile communications device has a screen and a function key (102) which is pressed for displaying information selected from the group comprising the combinations of the city name, the standard time difference, the monthly average temperature, the country code, the city long distance code and travel information.

4. The method of claim 3, wherein the city name is displayed in a combination selected from the group comprising traditional Chinese, simplified Chinese, and English.

5. The method of claim 1, wherein said look-up table includes said country codes and area codes in the alphabetical order of their corresponding city names.

6. The method of claim 1 further comprising the steps for modifying the look-up table by:
finding the city name from a city selection list screen and entering a city screen;
switching to an editing mode;
modifying incorrect data; and
storing the modified data and returning to the city selection list screen.

7. The method of claim 1 further comprising the following steps for appending data to the look-up table:
selecting an appending mode from a city selection list screen;
entering contents of all items for appended data; and
storing the appended data and sorting all cities according to their names.

8. The method of claim 7, wherein the step of entering contents of all items for the appended data is performed by keeping items with no values empty and separating multiple values in the same item with commas.

9. The method of claim 1, wherein the mobile communications device supports the "+" standard support by the local telephone network.

10. A mobile communications device having a keypad with telephone dialling keys and further comprising:
a) a memory containing a stored look-up table of country codes and area codes of cities in different countries, the look-up table being addressable with city names;
b) means for entering or selecting a city name and addressing the look-up table therewith for providing the country code and area code thereof;
c) means for entering a local telephone number; and
d) means for combining said local telephone number with the country code and area code and dialling the resulting international telephone number.

11. A mobile communications device according to claim 10, comprising at least one function key (102) which is pressed for displaying a list of city names and a direction key (104) which is adapted to select a city name from said displayed list for addressing the look-up table.

12. A mobile communications device according to claim 10 or claim 11, comprising at least one function key (102) which is pressed for displaying information about a city selected from said list.

## Patentansprüche

1. Verfahren zum internationalen Wählen in einem mobilen Kommunikationsgerät mit einer Tastatur mit einer Telefonwahlfunktion, wobei das Verfahren die folgenden Schritte umfasst:
a) Bereistellen einer Verweistabelle mit Landesvorwahlen und Ortsvorwahlen von Städten in verschiedenen Ländern;
b) Eingabe oder Auswahl eines Namens einer Stadt und Adressieren der Verweistabelle damit, um die Landesvorwahl und die Ortvorwahl der Stadt vorzusehen;
c) Eingabe einer lokalen Telefonnummer; und
d) Kombinieren der genannten lokalen Telefonnummer mit der Landesvorwahl und der Ortsvorwahl aus Schritt b) und Wählen der resultierenden internationalen Telefonnummer.

2. Verfahren nach Anspruch 1, wobei das mobile Kommunikationsgerät mindestens eine Richtungstaste (104) und eine Funktionstaste (102) aufweist, und wobei die Funktionstaste gedrückt wird, um eine Liste von Städtenamen anzuzeigen, und wobei die genannte Richtungstaste einen Namen einer Stadt aus der genannten Liste zur Adressierung der Verweistabelle in Schritt b) auswählen kann.

3. Verfahren nach Anspruch 1, wobei das mobile Kommunikationsgerät ein Display und eine Funktionstaste (102) aufweist, die gedrückt wird, um Informationen anzuzeigen, die aus der Gruppe ausgewählt worden sind, welche die Kombinationen aus Städtenamen, normalem Zeitunterschied, der monatlichen Durchschnittstemperatur, der Landesvorwahl, der Ortsvorwahl und Reiseinformationen umfassen.

4. Verfahren nach Anspruch 3, wobei der Name der Stadt in einer Kombination angezeigt wird, die aus der Gruppe ausgewählt wird, die traditionelles Chinesisch, vereinfachtes Chinesisch und Englisch umfasst.

5. Verfahren nach Anspruch 1, wobei die genannte Verweistabelle die genannten Landesvorwahlen und Ortsvorwahlen in alphabetischer Reihenfolge gemäß den entsprechenden Städtenamen aufweist.

6. Verfahren nach Anspruch 1, wobei das Verfahren ferner die Schritte zur Modifikation der Verweistabelle durch folgende Maßnahmen umfasst:
Ermitteln des Namens der Stadt aus der Stadtauswahlliste und Wechsel auf eine Städtebildschirmanzeige;
Wechseln in einen Bearbeitungsmodus;
Modifizieren fehlerhafter Daten; und
Speichern der modifizierten Daten und Rückkehr zu der Bildschirmanzeige der Stadtauswahlliste.

7. Verfahren nach Anspruch 1, wobei das Verfahren ferner die folgenden Schritte zum Anhängen von Daten an die Verweistabelle umfasst:
Auswahl eines Anhängemodus aus einer Bildschirmanzeige für die Stadtauswahl;
Eingabe des Inhalts aller Objekte für angehängte Daten; und
Speichern der angehängten Daten und sortieren aller Städte nach deren Namen.

8. Verfahren nach Anspruch 7, wobei der Schritt der Eingabe des Inhalts aller Objekte für die angehängten Daten ausgeführt wird, indem Objekte ohne Werte leer bleiben, und wobei mehrere Werte in dem gleichen Objekt durch Kommas getrennt werden.

9. Verfahren nach Anspruch 1, wobei das mobile Kommunikationsgerät die "+" Standardunterstützung durch das lokale Telefonnetz unterstützt.

10. Mobiles Kommunikationsgerät mit einer Tastatur mit Telefonwahltasten, und wobei das Gerät ferner folgendes umfasst:
a) einen Speicher, der eine gespeicherte Verweistabelle mit Landesvorwahlen und Ortsvorwahlen von Städten in verschiedenen Ländern aufweist, wobei die Verweistabelle mit Städtenamen adressierbar ist;
b) eine Einrichtung zur Eingabe oder Auswahl eines Namens einer Stadt und Adressieren der Verweistabelle damit, um die Landesvorwahl und die Ortsvorwahl der jeweiligen Stadt vorzusehen;
c) eine Einrichtung zur Eingabe einer lokalen Telefonnummer; und
d) eine Einrichtung zum Kombinieren der genannten lokalen Telefonnummer mit der Landesvorwahl und der Ortsvorwahl, und Wählen der resultierenden internationalen Telefonnummer.

11. Mobiles Kommunikationsgerät nach Anspruch 10, wobei das Gerät mindestens eine Funktionstaste (102) umfasst, die gedrückt werden kann, um eine Liste von Städtenamen anzuzeigen, und mit einer Richtungstaste (104), die einen Namen einer Stadt aus der genannten angezeigten Liste zur Adressierung der Verweistabelle auswählen kann.

12. Mobiles Kommunikationsgerät nach Anspruch 10 oder 11, wobei das Gerät mindestens eine Funktionstaste (102) umfassen kann, die gedrückt wird, um Informationen zu einer aus der genannten Liste ausgewählten Stadt anzuzeigen.

## Revendications

1. Méthode de composition d'un numéro international sur un appareil mobile de communication possédant un clavier ayant pour fonction la composition d'un numéro de téléphone, la méthode comprenant les étapes consistant à :
a) fournir un tableau de recherche des indicatifs de pays et des indicatifs régionaux des villes de différents pays ;
b) entrer ou sélectionner le nom d'une ville et consulter le tableau de recherche pour obtenir l'indicatif du pays et l'indicatif régional correspondant à la ville;
c) entrer un numéro de téléphone local, et
d) combiner ledit numéro de téléphone local avec l'indicatif du pays et l'indicatif régional de l'étape b) et composer le numéro de téléphone international qui en résulte.

2. Méthode selon la revendication 1 dans laquelle l'appareil mobile de communication possède au moins une touche directionnelle (104) et une touche de fonction (102) et dans laquelle la touche de fonction est pressée pour afficher une liste de noms de villes et ladite touche directionnelle est adaptée à la sélection du nom d'une ville dans ladite liste pour consulter le tableau de recherche lors de l'étape b).

3. Méthode selon la revendication 1, dans laquelle l'appareil mobile de communication possède un écran et une touche de fonction (102) que l'on presse pour afficher des informations choisies dans le groupe constitué d'une combinaison du nom de la ville, du décalage horaire, de la température mensuelle moyenne, de l'indicatif du pays, de l'indicatif longue distance de la ville et d'informations de voyage.

4. Méthode selon la revendication 3, dans laquelle le nom de ville est affiché sous forme d'une combinaison choisie dans le groupe comprenant le chinois traditionnel, le chinois simplifié et l'anglais.

5. Méthode selon la revendication 1, dans laquelle ledit tableau de recherche inclut lesdits indicatifs de pays et indicatifs régionaux dans l'ordre alphabétique des noms de ville qui leurs correspondent.

6. Méthode selon la revendication 1, comprenant en outre les étapes consistant à modifier le tableau de recherche en :
trouvant un nom de ville sur un écran affichant une liste de villes et en appelant un écran correspondant à une ville ;
basculant en mode édition ;
modifiant des données incorrectes ; et
sauvegardant les données modifiées puis en retournant à l'écran affichant la liste de sélection des villes.

7. Méthode selon la revendication 1 comprenant en outre les étapes suivantes pour ajouter des données au tableau de recherche, consistant à :
sélectionner un mode ajout de données sur un écran affichant la liste de sélection des villes ;
entrer le contenu de tous les items des données à ajouter ; et
sauvegarder les données ajoutées et trier toutes les villes selon leur nom.

8. Méthode selon la revendication 7, dans laquelle l'étape consistant à entrer le contenu de tous les items de données ajoutées est effectuée en maintenant vides les items non définis et en séparant par des virgules les valeurs multiples d'un même item.

9. Méthode selon la revendication 1, dans laquelle l'appareil mobile de communication supporte le code standard « + » supporté par le réseau téléphonique local.

10. Appareil mobile de communication comportant un clavier à touches de composition d'un numéro de téléphone comprenant en outre :
a) une mémoire contenant un tableau de recherche mémorisé des indicatifs de pays et des indicatifs régionaux de villes de différents pays, le tableau de recherche étant consultable au moyen des noms de villes ;
b) des moyens pour entrer ou sélectionner le nom d'une ville et consulter le tableau de recherche qui les contient pour obtenir l'indicatif de pays et l'indicatif régional de ladite ville ;
c) des moyens pour entrer un numéro de téléphone local ; et
d) des moyens pour combiner ledit numéro de téléphone local avec l'indicatif du pays et l'indicatif régional et composer le numéro de téléphone international qui en résulte.

11. Appareil mobile de communication selon la revendication 10, comprenant au moins une touche de fonction (102) que l'on presse pour afficher une liste de noms de villes et une touche directionnelle (104) qui est adaptée à la sélection du nom d'une ville à partir de ladite liste affichée, pour consulter le tableau de recherche.

12. Un appareil mobile de communication selon l'une quelconque des revendications 10 et 11, comprenant au moins une touche de fonction (102) que l'on presse pour afficher des informations sur la ville choisie dans ladite liste.
